# EUROPÄISCHE PATENTSCHRIFT

(11) **EP 2 374 768 B1**
(45) Veröffentlichungstag und Bekanntmachung des Hinweises auf die Patenterteilung: **13.01.2016**
(21) Anmeldenummer: 11160002.9
(22) Anmeldetag: 28.03.2011
(51) Int. Cl.: E04F 15/12, E04F 15/18, C04B 28/02, C04B 28/06, F24D 13/02, F24D 3/14

(54) **Fußbodenuntergrund**
Base layer for floor coverings
Substrat pour revêtements de sol

(30) Priorität: 08.04.2010 DE 102010003726
(43) Veröffentlichungstag der Anmeldung: 12.10.2011
(73) Patentinhaber: Uzin Utz AG, 89079 Ulm (DE)
(72) Erfinder: Säle, Michael, 97241 Bergtheim-Opferbaum (DE); Dr. Arnold, Norbert, 89264 Weißenhorn (DE)
(74) Vertreter: Isarpatent

(56) Entgegenhaltungen:
- EP-A2- 0 930 406
- DE-A1- 2 720 037
- DE-A1- 10 159 338
- DE-A1- 10 159 340
- DE-C2- 4 402 645
- DE-U1- 29 504 355

## Beschreibung

Die Erfindung betrifft Fußbodenuntergründe für einen Unterboden, Fußböden, Kombinationen zur Herstellung von Fußbodenuntergründen und Herstellungsverfahren.

### Stand der Technik

Bei der Herstellung von Fußböden muss eine stabile und gleichmäßige Verbindung des Fußbodenbelags mit einem Unterboden gewährleistet werden. Beim Bauen und Renovieren stehen im Allgemeinen Unterböden aus Rohmaterialien, insbesondere Beton, Holz oder Stein zur Verfügung. Diese sollen mit Bodenbelägen, wie Parkett, Laminat, Fliesen oder Kunststoffbelägen versehen werden. Zwischen den Bodenbelägen und den Unterböden werden Fußbodenuntergründe wie z. B. Estriche oder Spachtelmassen eingesetzt, die eine stabile Verbindung bewirken und häufig auch weitere Eigenschaften gewährleisten sollen. Der Fußbodenuntergrund soll als lastverteilende Schicht und häufig auch als Dämmung wirken, insbesondere als Wärmedämmung und Trittschalldämmung. Als Fußbodenuntergrund werden häufig dämmende Schichten in Verbindung mit Estrichen eingesetzt. Die Estriche sollen eine ebene Oberfläche gewährleisten und mit dem Bodenbelag selbst bzw. nach Aufbringung einer Spachtelmasse verbindbar sein, beispielsweise verklebbar sein.

Im Stand der Technik sind verschiedene Verfahren zur Herstellung von Fußbodenuntergründen bekannt. Wenn solche Untergründe eine Dämmwirkung aufweisen sollen und gleichzeitig eine stabile Verbindung mit einem Bodenbelag ermöglichen sollen, so ist im Allgemeinen ein mehrschichtiger Aufbau erforderlich. Beispielsweise wird bei bekannten Verfahren auf eine Betondecke eine Leichtausgleichsschüttung positioniert, die mit einer Abdeckung versehen wird. Auf die Abdeckung wird ein Fertigteilestrich, z. B. Holzspan- oder Gipsfaserplatten, gegeben, der mit einer Grundierung versehen wird. Die Grundierung wird im Allgemeinen mit einer Spachtelmasse überschichtet. Erst auf einen solchen Schichtaufbau wird dann der Bodenbelag verlegt, der mit einem Klebstoff fixiert wird. Bei manchen Bodenbelägen, z. B. bei Parkett, kann auch direkt auf den Fertigteilestrich unter Verzicht auf die Spachtelmasse geklebt werden.

Die bekannten Verfahren zur Herstellung von Fußbodenuntergründen mit Dämmwirkung und stabilisierender Wirkung weisen den Nachteil auf, dass sie vergleichsweise kompliziert sind. Sie erfordern den Einsatz einer Vielzahl von Materialien und Schichten. Dadurch ist die Verarbeitung zeit-, material und arbeitsaufwändig. Siehe zum Beispiel DE 101 59 340 A1.

Zudem weisen bekannte Systemen oft nicht eine optimale Kombination von vorteilhaften Eigenschaften auf. So ist es nach dem Stand der Technik problematisch, einen einfachen Fußbodenuntergrund zur Verfügung zu stellen, der gute Dämmeigenschaften, eine hohe Stabilität bzw. mechanische Belastbarkeit und ein geringes Gewicht aufweist. Die Kombination solcher Eigenschaften wird nach dem Stand der Technik im Allgemeinen nur erreicht, wenn eine Vielzahl von unterschiedlichen Materialien in vergleichsweise große Mengen miteinander kombiniert werden.

### Aufgabe der Erfindung

Der Erfindung liegt die Aufgabe zugrunde, Fußbodenuntergründe, Verfahren und Kombinationen zu ihrer Herstellung und Fußböden zur Verfügung zu stellen, welche die oben bezeichneten Probleme überwinden. Der erfindungsgemäße Fußbodenuntergrund soll eine stabile und gleichmäßige Verbindung eines Unterbodens zu einem Fußbodenbelag ermöglichen. Der Untergrund soll eine hohe Belastbarkeit und Festigkeit bei gleichzeitig geringem Gewicht aufweisen. Der Untergrund soll auch gute wärmedämmende Eigenschaften zeigen. Zudem soll der Unterboden eine kurze Trocknungszeit aufweisen und so die schnelle Verlegung eines Bodenbelags auf einem Unterboden ermöglichen.

Der Erfindung liegt auch die Aufgabe zugrunde, einen Fußbodenuntergrund zur Verfügung zu stellen, der auf einfache Weise mit vergleichsweise wenigen Arbeitsschritten herstellbar ist.

### Ausführung der Erfindung

Das der Erfindung zugrunde liegende Problem wird überraschenderweise gelöst durch Fußbodenuntergründe, Verwendungen, Verfahren, Fußböden und Kombinationen gemäß den Patentansprüchen.

Gegenstand der Erfindung ist ein Fußbodenuntergrund für einen Unterboden, umfassend eine Schicht aus einem Leichtausgleichsmörtel, die über dem Unterboden angeordnet ist, und eine Schicht aus einer Verbundausgleichsmasse, die über der Schicht angeordnet ist, dadurch gekennzeichnet, dass die Schicht ein Gelege umfasst, das mineralische Fasern aufweist.

Die Verbundausgleichsmasse ist selbstverlaufend. Selbstverlaufende Verbundausgleichsmassen werden häufig auch als Spachtelmassen bezeichnet.

Ein "Fußbodenuntergrund" im Sinne der Erfindung verbindet einen Unterboden mit einem Bodenbelag. Der erfindungsgemäße Fußbodenuntergrund kann weitere Schichten enthalten. Erfindungsgemäß wesentlich ist dabei, dass die Verbundausgleichsmasse über dem Leichtausgleichsmörtel angeordnet ist und dass die mineralischen Fasern in die Verbundausgleichsmasse eingebunden sind. Bevorzugt schließt die Verbundausgleichsmasse direkt an den Leichtausgleichsmörtel an. Beim Austragen der Verbundausgleichsmasse in nicht ausgehärteter Form wird diese über das auf dem Leichtausgleichsmörtel ausgelegte Gelege gegeben, so dass wegen der Porosität des Geleges die Verbundausgleichsmasse in dieses eindringt und dieses umschließt. In einer weiteren Ausführungsform kann die Oberfläche des Leichtausgleichsmörtels mit einer standfesten Spachtelmasse oder Grundierung geglättet werden und darauf das Gelege und die Verbundausgleichsmasse gegeben werden.

Der Leichtausgleichsmörtel wird in einer Ausführungsform direkt auf den Unterboden gegeben. Es ist erfindungsgemäß möglich, zwischen dem Unterboden und dem Leichtausgleichsmörtel mindestens eine weitere Schicht, beispielsweise eine Grundierung oder eine Trennfolie, anzuordnen.

Der erfindungsgemäße Fußbodenuntergrund wird auf einem Unterboden erzeugt. Durch die bindenden Eigenschaften des Leichtausgleichsmörtels wird eine feste Verbindung des Fußbodenuntergrunds an den Unterboden erzeugt. Alternativ kann auch auf einer Trennfolie, z. B. aus Polyethylen, verlegt werden. Als Unterboden ist grundsätzlich jeder Boden geeignet, der im Baubereich oder bei Renovierungen vorliegen kann. In einer bevorzugten Ausführungsform der Erfindung ist der Unterboden ein Betonboden oder ein Holzboden. Der Holzboden kann beispielsweise eine Holzbalkendecke oder ein Dielenboden sein. Der Unterboden kann eine raue oder unebene Beschaffenheit aufweisen.

Auf den Unterboden wird ein Leichtausgleichsmörtel aufgetragen. Der Mörtel enthält ein hydraulisches Bindemittel, bevorzugt Zement, oder er kann mit einem Reaktions-Harz, beispielsweise einem Zweikomponenten-Reaktions-Harz, beispielsweise auf Epoxid- oder Polyurethanharzbasis, als Bindemittel ausgerüstet sein.

In einer bevorzugten Ausführungsform der Erfindung weist der Leichtausgleichsmörtel einen Zuschlag aus einem organischen Polymer, insbesondere Polystyrol, auf. Der Zuschlag weist eine relativ niedrige Dichte auf.

Allgemein sind Zuschläge einsetzbar, die eine deutlich geringere Dichte als übliche Zuschläge wie Quarz, Kalkstein oder der Zement selbst aufweisen. Die Dichte der Zuschläge sollte kleiner als 1 kg/l, bevorzugt kleiner als 0,5 kg/l und insbesondere bevorzugt kleiner als 0,1 kg/l betragen. Besonders bevorzugt sind Zuschläge aus geschäumten organischen Polymeren, die allgemein eine besonders geringe Dichte aufweisen. Besonders bevorzugt ist geschäumtes Polystyrol, das unter dem Handelsnamen Styropor® (BASF® AG) bekannt ist. Weitere bevorzugte Leichtzuschläge sind Blähglas, Blähton oder Perlit. Der Zuschlag des organischen Polymers, insbesondere des Styropors, wird bevorzugt in Form eines Granulats eingesetzt. mittlere Der Durchmesser der Granulatkörner beträgt beispielsweise 0,5 mm bis 10 mm, bevorzugt 1 mm bis 6 mm. Besonders bevorzugt ist Styropor® -Granulat. Solche Leichtzuschläge führen zu einer hohen Wärmedämmung und zu einem niedrigen Flächengewicht des Fußbodenuntergrunds.

In einer bevorzugten Ausführungsform weist der Leichtausgleichsmörtel eine Trockenzeit (Zeit bis zur Belegbarkeit mit der Verbundausgleichsmasse) von weniger als 48 Stunden, insbesondere von weniger als 36 Stunden, besonders bevorzugt von etwa 24 Stunden auf. Die Trockenzeit liegt beispielsweise im Bereich von 6 bis 48 Stunden, insbesondere 12 bis 36 Stunden. Höhere Schichtdicken (größer 5 cm) des Leichtausgleichsmörtel können dabei längere Trockenzeiten benötigen.

Der Leichtausgleichsmörtel wird beispielsweise in einer Schichtdicke von 0,5 bis 50 cm, insbesondere 1 bis 20 cm aufgetragen. Bevorzugt beträgt die Auftragsdicke mindestens 3 cm, um gute Dämmeigenschaften bei ausreichender Stabilität zu erreichen.

In einer bevorzugten Ausführungsform der Erfindung weist die ausgehärtete Verbundausgleichsmasse eine Dichte von mindestens 1,2 kg/l oder mindestens 1,5 kg/l auf. Die Dicke der Schicht der Verbundausgleichsmasse liegt beispielsweise zwischen 3 und 30 mm, oder zwischen 3 und 20 mm. Bevorzugt weist die Schicht eine Dicke von mindestens 5 mm, insbesondere von 5 mm bis 10 mm auf.

Die Verbundausgleichsmasse enthält bevorzugt ein hydraulisches Bindemittel, insbesondere Zement. Die Druckfestigkeit beträgt bevorzugt mindestens 20 N/mm², besonders bevorzugt mindestens 25 N/mm². Um nicht zu tief in die groben Poren des Leichtausgleichsmörtels einzudringen, enthält die Verbundausgleichsmasse in einer bevorzugten Ausführungsform einen Grobkornanteil. Beispielsweise ist ein Anteil mit einem Korndurchmesser größer als 300 Mikrometer (Siebanalyse) von mindestens 5 Gew.-%, bevorzugt mindestens 10 Gew.-%, enthalten. Die Verbundausgleichsmasse kann weitere übliche Zusätze enthalten, wie mineralische Zuschläge, z. B. Quarzsand oder Kalksteinmehl, Fließmittel, z. B. Casein oder Polycarboxylatether, oder redispergierbares Dispersionspulver, z. B. Polyvinylacetat-Copolymere.

In einer bevorzugten Ausführungsform der Erfindung sind die mineralischen Fasern Glasfasern. Grundsätzlich sind jedoch allgemein bekannte mineralische Fasern einsetzbar, beispielsweise Steinwolle oder Keramikfasern. Die mineralischen Fasern werden in Form eines Geleges eingesetzt. Besonders bevorzugt ist die Verwendung eines Vlieses oder Vliesstoffs. Das Gelege wird Bestandteil der Schicht aus der Verbundausgleichsmasse. Dabei wird das Gelege auf die vollständig oder teilweise ausgehärtete Schicht aus dem Leichtausgleichsmörtel positioniert. Darüber wird die nicht abgebundene Verbundausgleichsmasse gegeben. Diese dringt in die Zwischenräume des Geleges ein, wobei die Einarbeitung des Geleges gegebenenfalls durch Erzeugung von Druck, z. B. durch eine Stachelwalze, unterstützt wird.

In einer bevorzugten Ausführungsform wird bei der Herstellung des Fußbodenuntergrundes ein Vlies aus Glasfasern eingesetzt, in dem die Glasfasern mit einem wasserlöslichen Bindemittel, z. B. Polyvinylalkohol, verfestigt sind. Die Faserlänge beträgt zwischen 10 und 100 mm, oder zwischen 20 und 100 mm, bevorzugt zwischen 30 und 80 mm. Die Faserdicke beträgt zwischen 5 und 20 µm, bevorzugt zwischen 10 und 15 µm. Nach dem Ausgießen der Wasser enthaltenden Ausgleichsmasse auf das Vlies löst sich das Bindemittel, das die Fasern des Geleges zusammenhält. Die Fasern werden somit vollständig von der Spachtelmasse umgeben. Sie verstärken dadurch die Verbundausgleichsmasse über deren Querschnitt und wirken gemeinsam mit der Verbundausgleichsmasse armierend parallel zur Oberfläche des Leichtausgleichsmörtels. Die Kombination von hoher Zugfestigkeit der Glasfasern mit der hohen Druckfestigkeit der erhärteten Verbundausgleichsmasse erlaubt die Aufnahme hoher Lasten. Durch die hohe Verbundfestigkeit zwischen armierter Verbundausgleichsmasse und Leichtausgleichsmörtel können hohe, von der Oberfläche einwirkende Kräfte, schadensfrei in das Verbundsystem eingeleitet werden. Durch die Glasfaserarmierung kann das Verbundsystem darüber hinaus auch Dehnungen und Schwingungen aus dem Unterboden schadensfrei aufnehmen und ableiten.

Der erfindungsgemäße Fußbodenuntergrund kann weitere Schichten enthalten.

In einer bevorzugten Ausführungsform schließt die Schicht aus dem Leichtausgleichsmörtel direkt an den Unterboden an, ohne dass eine weitere Zwischenschicht vorliegt. In einer bevorzugten Ausführungsform schließt die Schicht aus dem Leichtausgleichsmörtel direkt an die Schicht aus der Verbundausgleichsmasse an, ohne dass eine weitere Zwischenschicht vorliegt. In einer weiteren bevorzugten Ausführungsform sind der Unterboden, gegebenenfalls eine Grundierungsschicht, die Schicht aus dem Leichtausgleichsmörtel und die Schicht aus der Verbundausgleichsmasse direkt miteinander verbunden, ohne dass dazwischen weitere Schichten vorliegen.

In einer bevorzugten Ausführungsform der Erfindung wird die Schicht aus der Verbundausgleichsmasse zusätzlich mit Armierungsfasern aus organischen Polymeren, z. B. Polypropylen oder aus Glas versehen. Die Armierungsfasern können dann eine zusätzliche Stabilisierung bewirken. Armierungsfasern aus polymeren Werkstoffen oder Glas sind im Stand der Technik bekannt. Geeignete Fasern werden beispielsweise von der Uzin Utz AG unter der Markenbezeichnung "UZIN® Armierungsfasern" angeboten.

In einer bevorzugten Ausführungsform der Erfindung umfasst der Fußbodenuntergrund für einen Unterboden, insbesondere aus Beton oder Holz, eine Schicht aus einem Leichtausgleichsmörtel enthaltend einen Zuschlag aus Polystyrol, die über dem Unterboden angeordnet ist, und eine darüber liegende Schicht aus einer Verbundsausgleichsmasse, die eine Dichte von mindestens 1,2 kg/l aufweist, wobei die Schicht aus einer Verbundausgleichsmasse ein Gelege umfasst, das Glasfasern aufweist.

Der Leichtausgleichsmörtel wird beispielsweise in einer Menge von 0,5 bis 8 kg/m²/cm, oder auch 1 bis 8 kg/m²/cm insbesondere 1,5 bis 6 kg/m²/cm, weiterhin 2 bis 6 kg/m²/cm, in einer weiteren Ausgestaltungsform von 2 oder 3 bis 4 kg/m²/cm verbraucht. Die Verbundausgleichsmasse wird beispielsweise in einer Menge von 7,5 bis 30, oder 7,5 bis 25, insbesondere 10 bis 25, oder 15 bis 20 kg/m²/mm verbraucht. Sofern auf dem Untergrund eine Grundierung eingesetzt wird, so werden üblicherweise etwa 50 bis 300 g/m², beispielsweise etwa 150 g/m² eingesetzt. Schichtdicken üblicherweise verwendeter Trennfolien aus Polyethylen liegen zwischen 0,05 und 0,2 mm.

Gegenstand der Erfindung ist auch ein Fußboden, umfassend einen erfindungsgemäßen Fußbodenuntergrund und mindestens eine weitere darüber liegende Schicht, ausgewählt aus Parkett, Laminat, Teppich, Kunststoff, Keramik oder Stein. Grundsätzlich kann jeder bekannte Fußbodenbelag auf dem erfindungsgemäßen Fußbodenuntergrund verlegt werden. Zum Verkleben oder Verfestigen werden bekannte Methoden eingesetzt.

Gegenstand der Erfindung ist auch eine Kombination zur Herstellung eines erfindungsgemäßen Fußbodenuntergrunds umfassend
- a): einen Leichtausgleichsmörtel,
- b): eine Verbundsausgleichsmasse und
- c): ein Gelege, das mineralische Fasern aufweist.

Erfindungsgemäß wird unter einer "Kombination" ein Kit oder ein sonstiges Produkt, insbesondere ein Halbfertigprodukt oder Fertigprodukt, verstanden, in dem die drei Komponenten in räumlicher Nähe angeordnet sind. Die Komponenten sind dabei zur erfindungsgemäßen Nutzung hergerichtet. Die Kombination vereinfacht dem Anwender die Herstellung des erfindungsgemäßen Fußbodenuntergrunds.

In einer weiteren Ausgestaltungsform der Erfindung liegt der erfindungsgemäße Fußbodenuntergrund in Form einer vorgefertigten Platte vor, die werkseitig hergestellt wird und dann auf einem Unterboden (1) angebracht werden kann.

In einer weiteren Ausführungsform der Erfindung werden unterhalb des Geleges (5) Rohre für eine Fußbodenheizung angebracht. Diese können in einer Ausgestaltungsform direkt auf dem ausgehärteten Leichtausgleichsmörtel aufgebracht, oder, in einer weiteren Ausführungsform, in den Leichtausgleichsmörtel eingebettet werden, so dass die Heizungsrohre bevorzugt mit der Oberkante des Leichtausgleichsmörtels abschließen. Im Falle der Einbettung können die Heizungsrohre entweder in den frischen Leichtausgleichsmörtel oberflächenbündig eingelegt werden oder in den ausgehärteten Leichtausgleichsmörtel werden nach der Erhärtung Vertiefungen, beispielsweise Rinnen, gefräst, in welche dann die Heizungsrohre gelegt werden. In letzterem Fall werden möglicherweise verbleibende Hohlräume um die Heizungsrohre mittels der erfindungsgemäß eingesetzten Verbundausgleichsmasse gefüllt, alternativ auch mit einer anderen, insbesondere wärmeleitfähigen Masse verfüllt. In einer weitern Ausgestaltung wird zwischen der Oberfläche des Leichtausgleichsmörtels und dem Glasgelege ein elektrisches Heizelement, beispielsweise eine Heizmatte eingelegt. Die Matte weist dabei bevorzugt Öffnungen auf, die eine Verbindung zwischen dem Leichtausgleichsmörtel und der Verbundausgleichsmasse ermöglichen.

Gegenstand der Erfindung ist auch ein Verfahren zur Herstellung eines Fußbodenuntergrunds, umfassend Auftragen einer Schicht aus einem Leichtausgleichsmörtel auf einen Unterboden, zumindest teilweises Aushärten der Schicht, Positionieren eines Geleges, das mineralische Fasern aufweist, auf dieser Schicht, Auftragen einer Schicht aus einer Verbundsausgleichsmasse, wobei die Verbundausgleichsmasse das Gelege umschließt.

Grundsätzlich erfolgen das Auftragen der Schichten und die Herstellung des Fußbodenuntergrunds nach bekannten Methoden. Die Grundmaterialien für die Schichten werden im nicht ausgehärteten Zustand auf die darunter liegende Schicht aufgetragen und die Oberfläche mit bekannten Methoden eingeebnet. Das Austragen und Einebnen kann beispielsweise durch Spachteln erfolgen. Üblicherweise wird eine Schicht ausgetragen, wenn die darunter liegende Schicht ganz oder teilweise ausgehärtet ist. Die Viskosität der Spachtelmassen wird so eingestellt, dass die Verarbeitbarkeit gewährleistet ist und dass darin enthaltene Gelege oder Vliese gleichmäßig von dem Mörtel umschlossen werden. Falls größere Mengen der Spachtelmassen eingesetzt werden, so können auch elektrische Geräte, beispielsweise Pumpen, wie Schneckenpumpen, zur Verarbeitung eingesetzt werden. Die Größe der Vliese und Gewebe wird vor dem Aufbringen eingestellt, beispielsweise durch Schneiden. Sofern erforderlich, werden unterstützende Bauteile, wie Randdämmstreifen, eingesetzt, um eine gleichmäßige Einarbeitung zu unterstützen.

In einer bevorzugten Ausführungsform des Verfahrens sind die mineralischen Fasern mit einem wasserlöslichen Klebstoff verbunden.

Die erfindungsgemäßen Fußbodenuntergründe sowie die weiteren Ausführungsformen der Erfindung lösen die der Erfindung zugrunde liegende Aufgabe. Der erfindungsgemäße Fußbodenuntergrund bewirkt eine stabile und gleichmäßige Verbindung zwischen einem Fußboden/Bodenbelag und einem Untergrund. Durch das Glasfaservlies wird eine hohe Stabilität über die gesamte Breite des Fußbodens hinweg erreicht. Gleichzeitig wird eine effiziente Versiegelung des Leichtausgleichsmörtels erreicht. Erfindungsgemäß wird durch das Glasfaservlies auch der Auftrieb von Granulatkörnern des Leichtfüllstoffs, beispielsweise des Styropors, von der Oberseite des ausgehärteten Leichtausgleichsmörtels vollständig verhindert. Aufgetriebene Körner von Leichtzuschlag würden zu Fehlstellen in der Oberfläche der Verbundausgleichsmasse führen, die ohne zusätzliche Maßnahmen auch im Bodenbelag erkennbar wären. Somit ermöglicht es die erfindungsgemäße Kombination, eine Verbundausgleichsmasse direkt auf einen Leichtausgleichsmörtel aufzutragen. Es ist nicht erforderlich, die unebene Oberfläche der Verbundausgleichsmasse abzuschleifen oder in aufwändigen Verfahren nach dem Trocknen zu glätten. Überraschenderweise kann mit Hilfe des Glasfaservlieses in der Verbundausgleichsmasse eine starke und effiziente Verbindung zwischen einer darunter liegenden Schicht mit einem Leichtfüllstoff erreicht werden. Damit wird das Problem bekannter Schichtstrukturen vermieden, bei denen die Leichtfüllstoffe sich aus Dämmschichten herauslösen und in darüber liegende Schichten eindringen.

Darüber hinaus weist der erfindungsgemäße Fußbodenuntergrund eine unerwartet hohe Festigkeit über die Breite auf. Die Anordnung der Glasfasern über die gesamte Dicke der Verbundausgleichsmasse bewirkt eine effektive Verteilung von Lasten auf den gesamten Untergrund. Erfindungsgemäße Fußböden sind daher vergleichsweise sehr hoch belastbar.

Insgesamt ist der erfindungsgemäße Fußbodenuntergrund auch in vergleichsweise kurzer Zeit herstellbar. Es ist nur ein vergleichsweise geringer Materialaufwand erforderlich, um einen stabilen Untergrund zu erreichen. Der Leichtzuschlag im Leichtausgleichsmörtel führt zu einer hohen Wärmedämmung bei gleichzeitig niedrigen Flächenlasten. Der Fußbodenuntergrund weist auch ein günstiges Brandverhalten auf und erfüllt die üblichen Brandschutzauflagen. Zudem ist der Untergrund wasserfest und kann auch in Nassbereichen in Innenräumen eingesetzt werden.

Der erfindungsgemäße Fußbodenuntergrund ist in wenigen einfachen Arbeitsschritten herstellbar. Erfindungsgemäß kann ein Unterboden mit einem Fußbodenuntergrund versehen werden, wenn lediglich zwei Schichten aus abbindbaren Massen übereinander aufgetragen werden, wobei die obere Schicht mit einem Gelege stabilisiert wird. Der erfindungsgemäße Untergrund ist deutlich einfacher strukturiert als bekannte Estrichaufbauten, die häufig 5 Schichten oder mehr aufweisen. So wird nach dem Stand der Technik ein Fußbodenuntergrund, beispielsweise aus einer Leichtausgleichsschüttung in Verbindung mit einer Abdeckung, einem Fertigteile-Estrich, einer darüber liegenden Grundierung und einer darüber liegenden Spachtelmasse hergestellt. Das erfindungsgemäße Verfahren ist schneller, einfacher und materialsparend.

### Figur

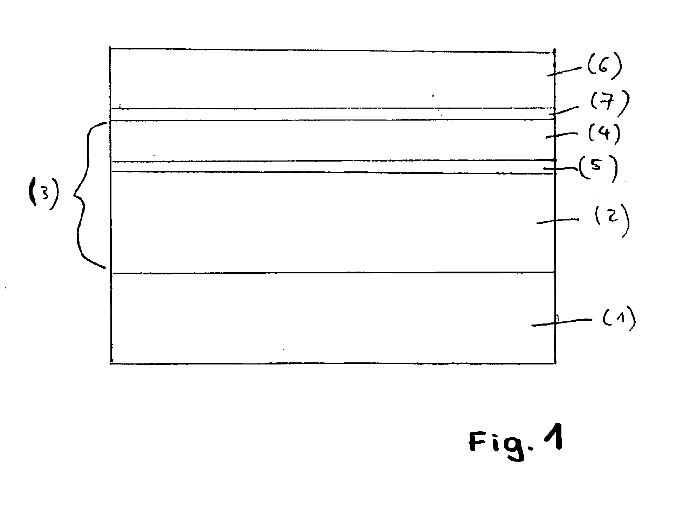

Fig. 1 zeigt beispielhaft und schematisch einen Fußbodenuntergrund (3) für einen Unterboden (1) gemäß der Erfindung. Auf dem Unterboden (1) ist eine Schicht (2) aus einem Leichtausgleichsmörtel angeordnet. Auf dieser ist eine Schicht (4) aus einer Verbundausgleichsmasse angeordnet, die ein Gelege (5) umfasst, das mineralische Fasern aufweist. Da das Gelege (5) von der Verbundausgleichsmasse durchdrungen ist, ist es schematisch als unterer Bestandteil der Schicht (4) dargestellt; im ausgehärteten Zustand ist es allerdings über die Dicke der Verbundausgleichsmasse verteilt. Die Schichten (2), (4) und (5) bilden den Fußbodenuntergrund (3). Auf dem Fußbodenuntergrund kann ein Bodenbelag (6) verlegt werden, der gegebenenfalls mit einer Fixierungsschicht (7) fixiert wird, beispielsweise verklebt wird.

### Ausführungsbeispiele

Ein dauerhaft trockener Untergrund aus Beton oder Holzbalken wird gereinigt. Lose und schwach anhaftende Teile werden durch gründliches Absaugen entfernt. Es wird eine Universalgrundierung (UZIN® PE 360; Uzin Utz AG) mit einer Schaumstoffrolle aufgetragen (etwa 150 g/m²). Anschließend werden Randdämmstreifen angebracht.

Als Leichtausgleichsmörtel wird UZIN® NC 194 Turbo eingesetzt. Dieser besteht zu ca. 96 Gew.-% aus Zement und zu ca. 4 Gew-% aus Zuschlag, bestehend aus einem Granulat von Styropor® mit einem Korndurchmesser von ca. 2 - 6 mm. Die Rohdichte des Trockenmörtels beträgt ca. 0,26 kg/l. Die Mindestschichtdicke beträgt 3 cm. An Übergangsstellen zu Unebenheiten im Unterboden ist ein dünnerer Auszug bis hinunter auf Granulatstärke möglich. Der Verbrauch des Leichtausgleichsmörtels liegt bei 2,6 kg/m²/cm. Die Belegreife wird nach 24 Stunden (bis 5 cm Dicke) bzw. nach 48 Stunden (über 5 cm Dicke) erreicht (20 °C/ 65 % r. F.). Auf den Leichtausgleichsmörtel wird nach dem Aushärten ein Glasfaservlies gegeben (UZIN® RR 201). Die mittlere Faserlänge beträgt ca. 75 mm, die mittlere Faserdicke ca. 14 Mikrometer. Über das Vlies wird die Verbundausgleichsmasse gegeben (UZIN® NC 195). Diese ist zusammengesetzt aus ca. 45 Gew.-% Quarzsand, 25 Gew.-% Kalksteinmehl, 20 Gew.-% Aluminatzement, 5 Gew.-% Portlandzement, 4 Gew.-% redispergierbares Dispersionspulver sowie < 1 Gew.-% Veflüssiger, und weitere Additive. Die Kornfraktionen der Verbundausgleichsmasse betragen ca. 15 Gew.-% > 300 Mikrometer, 10 Gew.-% größer 200 Mikrometer und kleiner 300 Mikrometer, 10 Gew.-% größer 140 Mikrometer und kleiner 200 Mikrometer. Die Austragung erfolgt zu einer Dicke (Überdeckung) von mindestens 5 mm bei einem Verbrauch von etwa 1,6 kg/m²/mm. Da die Verbundausgleichsmasse die groben Poren in der Oberfläche des Leichtausgleichsmörtels füllen muss, ergibt sich ein Gesamtverbrauch von 14 - 20 kg/m² an Verbundausgleichsmasse. Nach dem Erreichen der Belegreife der Verbundausgleichsmasse (ca. 3 Tage) wird ein elastischer oder textiler Bodenbelag oder Parkett mit geeigneter Verklebung verlegt.

Vergleichende Belastungsversuche belegen die unerwartet hohen Druckfestigkeiten des beschriebenen Fußbodenuntergrunds.
Aufbauten: Leichtausgleichsmörtel UZIN NC 194 Turbo, 4,5 cm, darauf 5 mm Überdeckung mit UZIN NC 195.
Variante 1: ohne weitere Komponenten
Variante 2: Verbundausgleichsmasse, verstärkt mit Glasfaser-Armierungsgewebe, quadratische Maschen, Maschenweite ca. 4 mm, Stegdicke ca. 0,5 mm
Variante 3: Verbundausgleichsmasse verstärkt mit Gelege (5) aus Glasfaservlies UZIN RR 201
Druckfestigkeiten der Varianten, ermittelt im Universaldruckversuch mit Rundstempel, Fläche = 100 mm² und Prüfgeschwindigkeit von 100 N/s.
Variante 1: 9,0 N/mm²
Variante 2: 8,4 N/mm²
Variante 3: 13,4 N/mm²

## Patentansprüche

1. Fußbodenuntergrund (3), der einen Unterboden (1) mit einem Bodenbelag verbindet, umfassend
eine untere Schicht (2) aus einem Leichtausgleichsmörtel, die über dem Unterboden angeordnet ist, und
eine obere Schicht (4) aus einer Verbundausgleichsmasse, die über der unteren Schicht (2) angeordnet ist, **dadurch gekennzeichnet, dass**
die obere Schicht (4) ein Gelege (5) umfasst, das mineralische Fasern aufweist, die mit einem wasserlöslichen Klebstoff verbunden sind.

2. Fußbodenuntergrund gemäß Anspruch 1, wobei der Unterboden (1) ein Betonboden oder ein Holzboden ist.

3. Fußbodenuntergrund gemäß mindestens einem der vorhergehenden Ansprüche, wobei der Leichtausgleichsmörtel einen Zuschlag aus einem geschäumten organischen Polymer, insbesondere Polystyrol, aufweist.

4. Fußbodenuntergrund gemäß mindestens einem der vorhergehenden Ansprüche, wobei die Verbundausgleichsmasse eine Dichte von mindestens 1,2 kg/l aufweist.

5. Fußbodenuntergrund gemäß mindestens einem der vorhergehenden Ansprüche, wobei die mineralischen Fasern Glasfasern sind.

6. Fußbodenuntergrund gemäß mindestens einem der vorhergehenden Ansprüche, wobei unmittelbar auf dem Unterboden (1) und unter dem Leichtausgleichsmörtel eine Grundierungsschicht oder eine Trennfolie angeordnet ist, und/oder wobei auf der Schicht (4) aus der Verbundausgleichsmasse ein Fußbodenbelag angeordnet ist, der gegebenenfalls mit der Verbundausgleichsmasse verklebt ist.

7. Fußbodenuntergrundgemäß mindestens einem der vorhergehenden Ansprüche" umfassend
eine untere Schicht (2) aus einem Leichtausgleichsmörtel, enthaltend einen Zuschlag aus geschäumtem Polystyrol, die über dem Unterboden angeordnet ist,
eine obere Schicht (4) aus einer Verbundsausgleichsmasse, die über der unteren Schicht (2) angeordnet ist und die eine Dichte von mindestens 1,2 kg/l aufweist, wobei
die obere Schicht (4) ein Gelege (5) umfasst, das Glasfasern aufweist, die mit einem wasserlöslichen Klebstoff verbunden sind.

8. Fußboden, umfassend einen Fußbodenuntergrund gemäß einem der vorhergehenden Ansprüche und mindestens eine weitere darüber liegende Schicht (6), ausgewählt aus Parkett, Laminat, Teppich, Kunststoff, Keramik oder Stein.

9. Kombination in Form eines Kits-of-Parts oder eines Fertigprodukts oder eines Halbfertigprodukts zur Herstellung eines Fußbodenuntergrunds, der einen Unterboden (1) mit einem Bodenbelag verbindet, gemäß mindestens einem der vorhergehenden Ansprüche, umfassend
a) einen Leichtausgleichsmörtel, der über dem Unterboden anzuordnen ist,
b) eine Verbundsausgleichsmasse, die über der unteren Schicht anzuordnen ist, und
c) ein Gelege (5), das mineralische Fasern aufweist, die mit einem wasserlöslichen Klebstoff verbunden sind, wobei das Gelege (5) von der oberen Schicht (4) umfasst wird.

10. Verfahren zur Herstellung eines Fußbodenuntergrunds (3), der einen Unterboden (1) mit einem Bodenbelag verbindet, umfassend
Auftragen einer unteren Schicht (2) aus einem Leichtausgleichsmörtel auf einen Unterboden (1),
Positionieren eines Geleges (5), das mineralische Fasern aufweist, die mit einem wasserlöslichen Klebstoff verbunden werden, auf der unteren Schicht (2),
Auftragen einer oberen Schicht (4) aus einer Verbundausgleichsmasse auf die untere Schicht (2), wobei die Verbundausgleichsmasse das Gelege (5) umschließt.

## Claims

1. Base layer for floor coverings (3), which connects a subfloor (1) to a floor covering, comprising
a lower layer (2) made of a lightweight levelling mortar, which is arranged over the subfloor, and
an upper layer (4) made of a composite levelling compound, which is arranged above the lower layer (2), **characterized in that**
the upper layer (4) comprises a fabric (5) which has mineral fibres that are connected by a water-soluble adhesive.

2. Base layer for floor coverings according to Claim 1, wherein the subfloor (1) is a concrete floor or a wooden floor.

3. Base layer for floor coverings according to at least one of the preceding claims, wherein the lightweight levelling mortar has an additive made of a foamed organic polymer, in particular polystyrene.

4. Base layer for floor coverings according to at least one of the preceding claims, wherein the composite levelling compound has a density of at least 1.2 kg/l.

5. Base layer for floor coverings according to at least one of the preceding claims, wherein the mineral fibres are glass fibres.

6. Base layer for floor coverings according to at least one of the preceding claims, wherein a priming layer or a separating film is arranged directly on the subfloor (1) and under the lightweight levelling mortar, and/or wherein a floor covering, which is possibly adhesively bonded to the composite levelling compound, is arranged on the layer (4) made of the composite levelling compound.

7. Base layer for floor coverings according to at least one of the preceding claims, comprising
a lower layer (2) made of a lightweight levelling mortar containing an additive made of foamed polystyrene, which is arranged above the subfloor,
an upper layer (4) made of a composite levelling compound, which is arranged above the lower layer (2) and which has a density of at least 1.2 kg/l, wherein
the upper layer (4) comprises a fabric (5) which has glass fibres that are connected by a water-soluble adhesive.

8. Floor, comprising a base layer for floor coverings according to one of the preceding claims and at least one further layer (6) located above, selected from parquet, laminate, carpet, synthetic material, ceramic or stone.

9. Combination in the form of a kit of parts or a finished product or a semi-finished product for the production of a base layer for floor coverings, which connects a subfloor (1) to a floor covering, according to at least one of the preceding claims, comprising
a) a lightweight levelling mortar which is to be arranged above the subfloor,
b) a composite levelling compound which is to be arranged above the lower layer, and
c) a fabric (5) which has mineral fibres that are connected by a water-soluble adhesive, wherein the fabric (5) is comprised by the upper layer (4).

10. Method for producing a base layer for floor coverings (3), which connects a subfloor (1) to a floor covering, comprising
applying a lower layer (2) made of a lightweight levelling mortar to a subfloor (1),
positioning a fabric (5) which has mineral fibres that are connected by a water-soluble adhesive on the lower layer (2),
applying an upper layer (4) made of a composite levelling compound to the lower layer (2), the composite levelling compound enclosing the fabric (5) .

## Revendications

1. Substrat pour revêtement de sol (3), qui relie une dalle (1) à un revêtement de sol, comprenant :
une couche inférieure (2) constituée d'un mortier d'égalisation léger, qui est disposée sur le substrat, et
une couche supérieure (4) constituée d'une masse d'égalisation composite, qui est disposée sur la couche inférieure (2), **caractérisée en ce que**
la couche supérieure (4) comprend une nappe (5) qui présente des fibres minérales qui sont liées par un adhésif hydrosoluble.

2. Substrat pour revêtement de sol selon la revendication 1, dans lequel la dalle (1) est un sol en béton ou un sol en bois.

3. Substrat pour revêtement de sol selon au moins l'une quelconque des revendications précédentes, dans lequel le mortier d'égalisation léger présente un constituant supplémentaire constitué d'un polymère organique moussé, en particulier un polystyrène.

4. Substrat pour revêtement de sol selon au moins l'une quelconque des revendications précédentes, dans lequel la masse d'égalisation composite présente une densité d'au moins 1,2 kg/l.

5. Substrat pour revêtement de sol selon au moins l'une quelconque des revendications précédentes, dans lequel les fibres minérales sont des fibres de verre.

6. Substrat pour revêtement de sol selon au moins l'une quelconque des revendications précédentes, dans lequel une couche primaire ou un film de séparation est disposé(e) directement sur la dalle (1) et sous le mortier d'égalisation léger, et/ou dans lequel un revêtement de sol est disposé sur la couche (4) constituée de la masse d'égalisation composite, lequel est collé éventuellement à la masse d'égalisation composite.

7. Substrat pour revêtement de sol selon au moins l'une quelconque des revendications précédentes, comprenant
une couche inférieure (2) constituée d'un mortier d'égalisation léger, contenant un constituant supplémentaire en polystyrène moussé, qui est disposé au-dessus de la dalle,
une couche supérieure (4) constituée d'une masse d'égalisation composite, qui est disposée au-dessus de la couche inférieure (2) et qui présente une densité d'au moins 1,2 kg/l,
la couche supérieure (4) comprenant une nappe (5) qui présente des fibres de verre qui sont liées par un adhésif hydrosoluble.

8. Revêtement de sol comprenant un substrat pour revêtement de sol selon l'une quelconque des revendications précédentes et au moins une couche (6) disposée par-dessus, sélectionnée parmi du parquet, du laminé, de la moquette, du plastique, de la céramique ou de la pierre.

9. Combinaison sous forme d'un kit de pièce ou d'un produit fini ou d'un produit semi-fini pour la fabrication d'un substrat pour revêtement de sol qui relie une dalle (1) à un revêtement de sol, selon au moins l'une quelconque des revendications précédentes, comprenant :
a) un mortier d'égalisation léger, qui doit être disposé sur la dalle,
b) une masse d'égalisation composite, qui doit être disposée sur la couche inférieure, et
c) une nappe (5) qui présente des fibres minérales qui sont liées par un adhésif hydrosoluble, la nappe (5) étant comprise par la couche supérieure (4).

10. Procédé de fabrication d'un substrat pour revêtement de sol (3) qui relie une nappe (1) à un revêtement de sol, comprenant
l'application d'une couche inférieure (2) constituée d'un mortier d'égalisation léger sur une dalle (1),
le positionnement d'une nappe (5) qui présente des fibres minérales qui sont liées par un adhésif hydrosoluble, sur la couche inférieure (2), l'application d'une couche supérieure (4) constituée d'une masse d'égalisation composite sur la couche inférieure (2), la masse d'égalisation composite entourant la nappe (5).
